# EUROPEAN PATENT APPLICATION

(11) **EP 4 583 463 A1**
(43) Date of publication of application: **09.07.2025**
(21) Application number: 24222659.5
(22) Date of filing: 20.12.2024
(51) Int. Cl.: H04L 12/40, H04L 47/62, H04L 47/6275, H04L 47/6295

(54) **APPARATUSES AND METHODS FOR PRIORITY TRANSMISSION SCHEME**

(30) Priority: 02.01.2024 US 202418402421
(71) Applicant: Analog Devices International Unlimited Company, Limerick (IE)
(72) Inventor: RYAN, Seamus Anthony, Co. Limerick (IE); JIMENEZ, Daniel, Co. Limerick (IE)
(74) Representative: Wallin, Nicholas James

(57) **Abstract**

Aspects of the present disclosure include a method, a controller, and/or a computer readable medium for providing a first queue having a first plurality of transmission opportunities for a plurality of nodes to transmit first information of a first priority, granting a first permission to at least a first subset of the plurality of nodes to transmit at least a first portion of the first information of the first priority, and replacing, after the transmitting the first information, a second queue having a second plurality of transmission opportunities for the plurality of nodes to transmit second information of a second priority with a third queue having a third plurality of transmission opportunities for the plurality of nodes to transmit third information of a third priority, the third priority being higher than the second priority.

## Description

### CROSS-REFERENCE TO RELATED APPLICATIONS

The present Application for Patent claims priority to U.S. Non-provisional Application No. 18/402,421, entitled, "APPARATUSES AND METHODS FOR PRIORITY TRANSMISSION SCHEME" filed January 2, 2024, which is hereby expressly incorporated by reference herein for all purposes.

### BACKGROUND

In a computer network, multiple devices may be connected together via one or more buses for communicating within and outside the network. The devices may be required to share the resources, such as communication channels and/or bandwidth. There may be numerous ways to implement resource scheduling for various devices that are interconnected. Example of resource scheduling include first-in-first-out (FIFO) and round robin. However, the scheduling schemes described above may have various shortcomings. Therefore, improvements are desirable.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Aspects of the present disclosure include a method, a controller, and/or a non-transitory computer readable medium for providing a first queue having a first plurality of transmission opportunities for a plurality of nodes to transmit first information of a first priority, granting a first permission to at least a first subset of the plurality of nodes to transmit at least a first portion of the first information of the first priority, and replacing, after the transmitting the first information, a second queue having a second plurality of transmission opportunities for the plurality of nodes to transmit second information of a second priority with a third queue having a third plurality of transmission opportunities for the plurality of nodes to transmit third information of a third priority, the third priority being higher than the second priority.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 illustrates an example of a priority transmission scheme according to aspects of the present disclosure.
FIG. 2 illustrates an example of a network for implementing a priority transmission scheme according to aspects of the present disclosure.
FIGs. 3A-B illustrate examples of resources during the implementations of a priority transmission scheme according to aspects of the present disclosure.
FIG. 4 illustrates an example of an end node for implementing a priority transmission scheme according to aspects of the present disclosure.
FIG. 5 illustrates an example of a controller for implementing a priority transmission scheme described above according to aspects of the present disclosure.
FIG. 6 illustrates an example of a method for implementing a priority transmission scheme according to aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Aspects of the present disclosure include a scheme to allow priority transmission arbitration to be implemented on a shared network bus (e.g., IEEE 10BASE-T1S shared multi-drop bus). The bus may support Physical Layer Collision Avoidance (PLCA), or other optimized round robin bus access methods (e.g., time division multiplexing) where the end of each round may be identified by each node sharing the bus. The cost for supporting this scheme may include a slight reduction in overall bandwidth efficiency on the network segment. The solution is interoperable with devices that do not support the priority scheme. Unsupported devices may operate as if they are transmitting with a particular priority (e.g., the highest or the lowest priority).

In some instances, a network may include a number of devices interconnected via one or more buses. The devices that share the network bus may operate with equal priority in situations (i.e., fairness of bus access). The result is that high priority traffic being delayed by lower priority traffic. This may limit the effectiveness of the network for certain applications where the latency of certain high priority messages is important. The absence of network priority also limits the features that can be implemented in the MAC layer.

In some instances, inter node priority may not be supported over the IEEE 10BASE-T1S bus (or other bus supporting sequential round robin access). Intra node (e.g. between priority queues within a specific node) is supported. Aspects of the present disclosure include a method to enable inter node priority support and combines that with the already existing intra node priority.

Conventional solutions may include allowing the transmission cycle to be interrupted after any node on the shared bus transmits a frame of data. The cycle then returns to the start. Nodes on the shared bus transmit in order of an identifier value, from lowest to highest. As such this scheme gives priority to nodes with lower values of the identifier value. This is non-standard and requires additional un-approved signaling on the bus.

In some aspects of the present disclosure, each PLCA cycle is reserved for a specific priority. The maximum number of PLCA cycles is set by the priority queues available on the segment (e.g., if a segment only supports 4 priorities then full PLCA priority cycle will be 4 cycles). Full priority cycle may begin with highest supported priority on the segment. If no frames are transmitted in a cycle, the next PLCA cycle represents the next supported priority. Each node keeps track of current PLCA cycle priority.

In certain aspects of the present disclosure, there may be two options for control of current priority cycle reset. For the first option, after every transmitted frame priority, the system returns to highest priority supported on the segment. This may occur for both frame and node priority. Under this option, the node with high priority frames may control the bandwidth. For the second option, after a PLCA cycle including at least one transmitted frame, priority returns to highest priority supported on the segment. This gives frame priority but with node fairness. Here, if a higher priority frame arrives at the egress queue of a node it may have to wait until lower priority frames (current PLCA priority cycle) completes before it gets a chance to transmit its frame. If the current node supports the current priority, is at its PLCA transmit opportunity slot, and has a frame available, then the current node can transmit. Otherwise, the node must wait until above conditions are met.

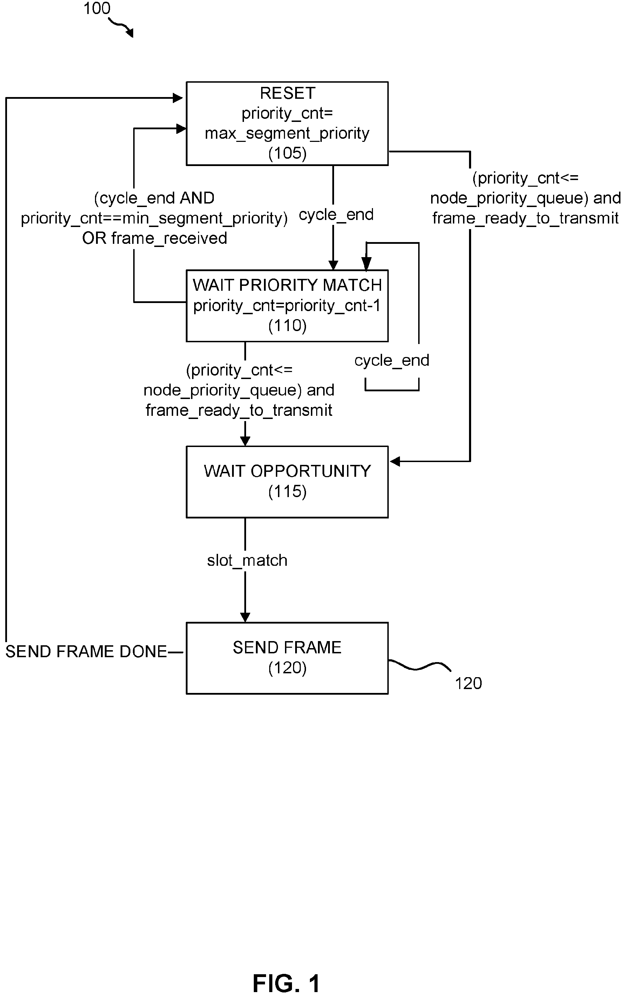

FIG. 1 illustrates an example of a priority transmission scheme 100 according to aspects of the present disclosure. The scheme 100 may be performed by an end node and/or one or more subcomponents or controllers of an end node. In the scheme 100, shared bus access may be granted in an optimized scheme, such as a round robin scheme. If the transmit opportunity is not utilized by a node quickly, the opportunity passes to the next node in the round. Each cycle represents a priority (stored in priority _cnt). The completion of each cycle is signaled by cycle_end. When a cycle completes without any node transmitting a frame of data on the shared bus, the priority count may be decremented to the next segment supported priority count. When the minimum supported segment priority cycle is completed, the priority is reset to the maximum supported segment priority.

In some aspects, when a frame of data is received (frame_received) during a cycle, there may be two options. First, every node resets its priority to the maximum supported segment priority immediately. Only nodes with maximum priority frame may transmit from then on. Second, every node resets its priority to the maximum supported segment priority at the end of the current cycle. Nodes with current active priority may transmit until the end of the cycle.

In certain aspects, when a node has a frame matching the current cycle priority and the corresponding slot of the node is matched, the node may transmit its frames. The supported priorities may be configured for each node. The segment supported priorities may be the superset of all supported node priorities.

At 105, the scheme 100 may begin the allocation of resource for the transmission of information associated with the highest priority. In some aspects, the scheme 100 may include multiple priority levels (also referred to as priorities). The scheme 100 may allocate one or more slots for the connected devices to transmit information (e.g., data) of the highest priority. The devices may or may not have data for transmission. The scheme 100 may wait for a first period of time.

At 110, in certain aspects, the scheme 100 may begin, after the expiration of the first period of time without transmitting any information of the highest priority, the allocation of resources for the transmission of information associated with the second highest priority. The scheme 100 may wait for a second period of time. The second period of time may be the same or different as the first period of time. If there are no information for transmission, the scheme 100 may begin the allocation of resources for the transmission of information associated with the next highest priority, and so forth and so on.

At 115, if there is information for transmission associated with the current priority (e.g., the second highest priority), the scheme 100 may wait for the transmission opportunity (TO) associated with the current priority.

At 120, the scheme 100 may transmit the information associated with the second highest priority. After the transmission of the information associated with the second highest priority, the scheme 100 may return to 105 to begin the allocation of resource for the transmission of information associated with the highest priority.

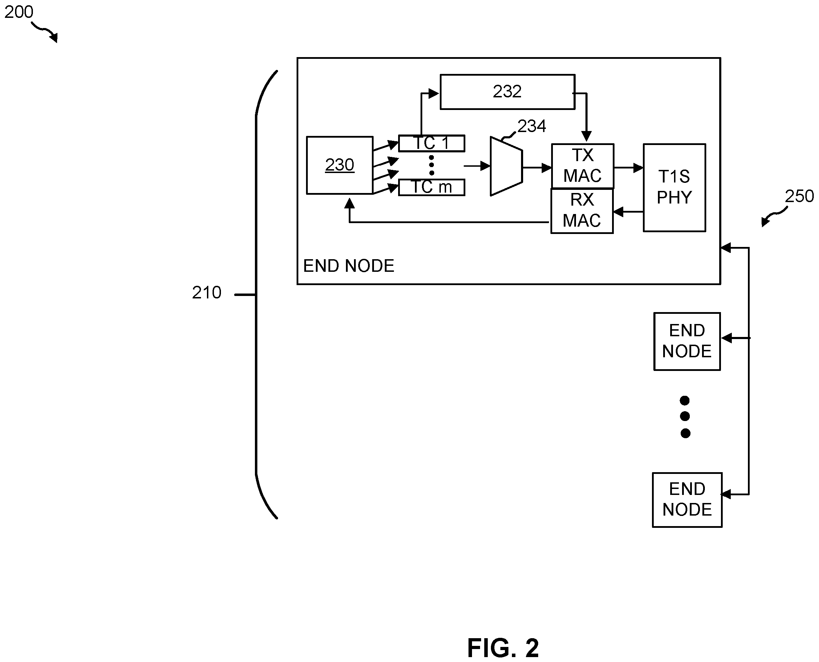

FIG. 2 illustrates an example of an environment 200 implementing the priority transmission scheme according to aspects of the present disclosure. In some aspects, the environment 200 may include a plurality of end nodes 210-1, 210-2... 210-n, where n is a positive integer configured to transmit and/or receive information. The current transmission scheme may be implemented by the plurality of end nodes 210-1, 210-2... 210-n.

In certain aspects, the current scheme may enable priority access to bus among end nodes. The bus access may operate using schemes such as round robin. Each round may represent a decrementing priority selection. Each node may transmit depending on whether they have a transmission queue configured to the current priority. The priority may reset to the maximum priority after any node transmits a frame. The priority may revert back to the maximum priority after the minimum priority transmission opportunity. The current scheme may be compatible with other standards, such as IEEE existing standards.

In one aspect, each of the plurality of end nodes 210-1, 210-2... 210-n may have a host controller 230 configured to operate the respective end nodes. For example, the host controller 230 may be configured to send data onto local queues TC 1... TC. The host controller 230 may be configured to receive data via the Reception (RX) Media Access Control (MAC) interface.

In some aspects, each of the plurality of end nodes 210-1, 210-2... 210-n may have the local queues TC 1... TC m associated with different transmission priorities, where m is a positive integer. An end node of the plurality of end nodes 210-1, 210-2... 210-n may place the highest priority information in the first local queue TC 1, the second highest in the second local queue TC 2, and so forth and so on. The local queues may indicate the order of information to be transmitted from the corresponding end node to external devices. The information with the highest priority (i.e., information in the first local queue TC 1) may be transmitted first, followed sequentially by the remaining information (if any) in the remaining queues. While the plurality of end nodes 210-1, 210-2... 210-n illustrated in FIG. 2 have the same number of priority levels, aspects of the present disclosure include a priority transmission scheme that is also suitable for the plurality of end nodes 210-1, 210-2... 210-n having different number of priority levels.

In certain aspects, each of the plurality of end nodes 210-1, 210-2... 210-n may include a priority controller 232 configured to control the multiplexer 234. For example, the priority controller 232 may determine the sequence of data from the local queues TC 1... TC m to be transmitted by the multiplexer 234. Each of the plurality of end nodes 210-1, 210-2... 210-n may include transmission (TX) MAC and receiving (RX) MAC interfaces, and a T1S PHY interface, which may be a 10BASE-TIS half duplex physical interface.

Aspects of the present disclosure may include implementing the priority transmission scheme at a physical interface 250 of the plurality of end nodes 210-1, 210-2... 210-n. The physical interface 250 may be the interface bridging the T1S PHY interfaces of the plurality of end nodes 210-1, 210-2... 210-n and other external devices.

In some aspects, the current scheme may allocate first resources, such as slots of network bandwidth, for the transmission of the information of a first priority. If no information is transmitted using the first resources, the scheme may allocate second resources for the transmission of the information of a second priority that is lower than the first priority. If the information is transmitted using some or all of the first resources (i.e., by one or more of the plurality of end nodes 210-1, 210-2... 210-n), the current scheme may allocate third resources for the transmission of the information of the highest priority. Specifically, the current scheme may allocate the third resources for the transmission of the information in the TC 1 queues (if any) of the plurality of end nodes 210-1, 210-2... 210-n. Here, the first priority may be the highest priority, or any of the lower priorities according to certain aspects of the present disclosure.

In some aspects, the current scheme may allocate the third resources after the transmission of the information (of the first priority) by all of the plurality of end nodes 210-1, 210-2... 210-n having information available for transmission. As such, the current scheme may include waiting for all of the information in the TC 1 queues of the plurality of end nodes 210-1, 210-2... 210-n to be transmitted before allocating the third resources. This is referred to as the first sub-scheme.

In other aspects, the current scheme may allocate the third resources after the transmission of the information (of the first priority) by the first end node of the plurality of end nodes 210-1, 210-2... 210-n having information available for transmission. As such, the current scheme may wait for only one end node to complete the transmission before allocating the third resources. This is referred to as the second sub-scheme. Other schemes according to aspects of the present disclosure may also be implemented.

For example, the current scheme may toggle between the two sub-schemes above. In another example, when operating in the second sub-scheme, the current scheme may refrain from allocating the third resources if the first priority is also the highest priority. In another example, when operating in the second sub-scheme, the current scheme may randomly select one end node for the transmission of the information of the first priority. In another example, when operating in the second sub-scheme, the current scheme may utilize the round robin scheme for selecting one end node for the transmission of the information of the first priority. Other variations are possible.

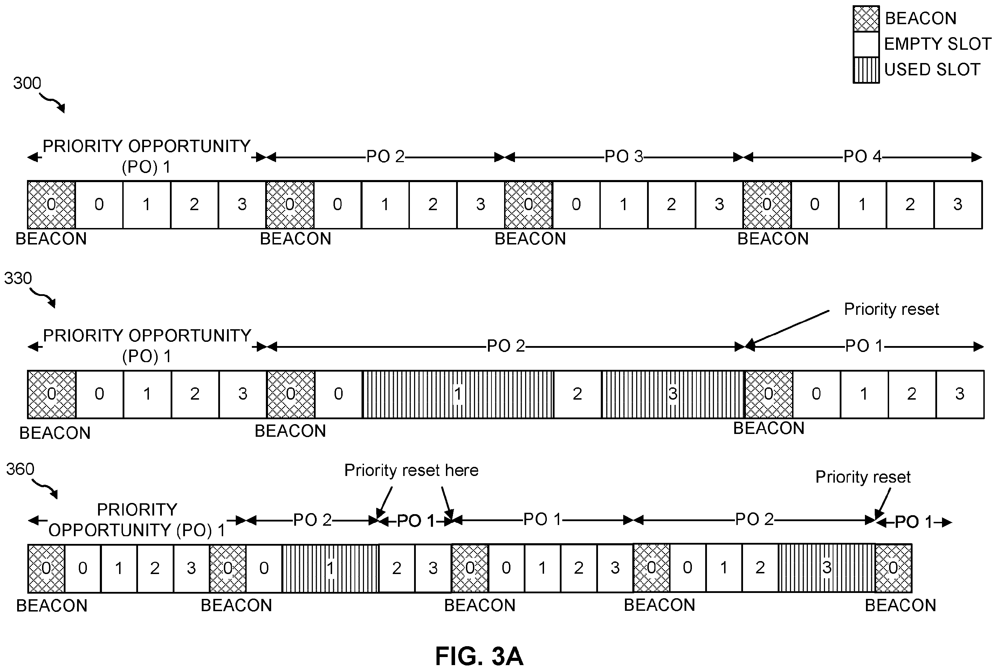

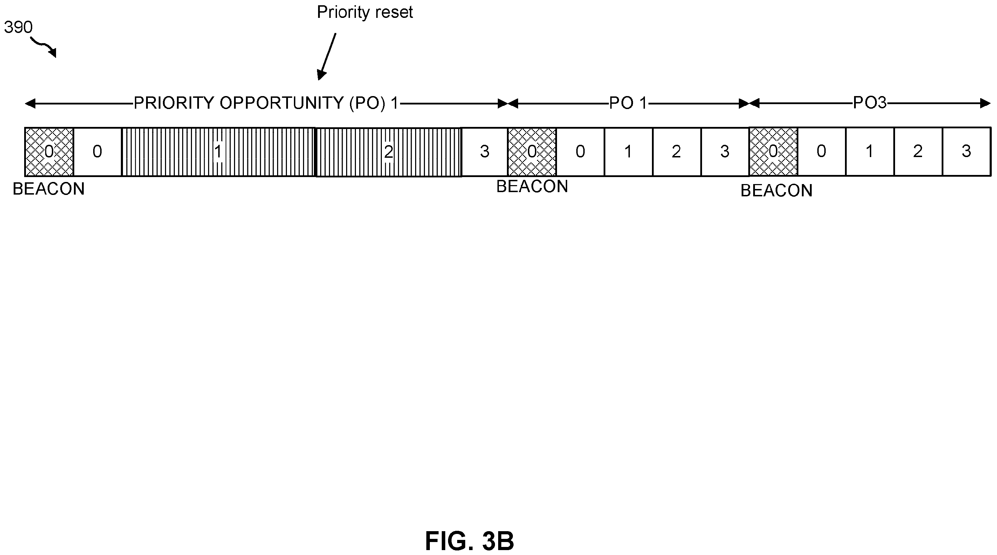

FIGs. 3A-B illustrate examples of resources during the implementation of the priority transmission scheme according to aspects of the present disclosure. In the examples shown in FIGs. 3A-B, the network includes four end nodes (end nodes 0, 1, 2, and 3), and four priority levels (levels 1, 2, 3, and 4). The resources allocated for each priority level may be separated by beacon signals.

In some aspects of the present disclosure, a first diagram 300 illustrates the priority transmission scheme without priority reset. Here, the first resources (first transmission queue) associated with priority opportunity 1 (PO 1, the highest priority - level 1) may include four slots allocated for the four end nodes for transmitting information of the highest priority (level 1). Since none of the end nodes have any information (of level 1 priority) for transmission, the scheme proceeds to allocate the second resources (second transmission queue) associated with PO 2 (the second highest priority - level 2) for the four end nodes. Since none of the end nodes have any information (of level 2 priority) for transmission, the scheme may continue to do the same for the third resources (third transmission queue) and the fourth resources (fourth transmission queue).

In one aspect of the present disclosure, a second diagram 330 illustrates the priority transmission scheme implementing the first sub-scheme. Here, the first resources (first transmission queue) associated with priority opportunity 1 (PO 1, the highest priority - level 1) may include four slots allocated for the four end nodes for transmitting information of the highest priority (level 1). Since none of the end nodes have any information (of level 1 priority) for transmission, the scheme proceeds to allocate the second resources (second transmission queue) associated with PO 2 (the second highest priority - level 2) for the four end nodes. However, both the end node 1 and the end node 3 have information (of the second highest priority level) to transmit. Consequently, both the end nodes 1 and 3 may transmit the corresponding information. After all the level 2 information have been transmitted, the scheme may perform a priority reset. After the priority reset, the scheme may allocate the third resources (third transmission queue) associated with PO 1 (the highest priority - level 1) after the beacon. Consequently, any of the end nodes may have priority to transmit level 1 information after all the level 2 information have been transmitted without having to wait for the possible transmission of level 3 and level 4 information.

In certain aspects of the present disclosure, a third diagram 360 illustrates the priority transmission scheme implementing the second sub-scheme. Here, the first resources (first transmission queue) associated with priority opportunity 1 (PO 1, the highest priority - level 1) may include four slots allocated for the four end nodes for transmitting information of the highest priority (level 1). Since none of the end nodes have any information (of level 1 priority) for transmission, the scheme proceeds to allocate the second resources (second transmission queue) associated with PO 2 (the second highest priority - level 2) for the four end nodes. However, both the end node 1 and the end node 3 have information (of the second highest priority level) to transmit. Since the scheme may be operating in the second sub-scheme, only the end node 1 may transmit the corresponding information. As such, after the level 2 information of the end node 1 has been transmitted, the scheme may perform a priority reset without permitting the end node 3 to transmit. After the priority reset, the scheme may allocate the third resources (third transmission queue) associated with PO 1 (the highest priority - level 1) before the beacon for end nodes 2 and 3 to transmit information. Next, another priority reset may occur for the scheme to allocate resources associated with PO1 (the highest priority - level 1) after the beacon for end nodes 0-3 to transmit information. Since none of the end nodes have any information (of level 1 priority) for transmission, the scheme may proceed to allocate the fourth resources (fourth transmission queue) associated with PO 2 (the second highest priority - level 2) for the four end nodes. The end node 3 still has information to transmit because during the PO 2 (i.e., second transmission opportunity), the end node 3 was unable to transmit due to the priority reset. Therefore, during the fourth resources, the end node 3 may be given the opportunity to transmit.

In some aspects, when the scheme is operating in the second sub-scheme, the scheme may track the nodes that were not able to transmit due to a priority reset (i.e., the end node 3 in the third diagram 360). In the next opportunity for the transmission of the same priority, the scheme may give priority to the nodes that were unable to transmit due to the priority reset.

In certain aspects of the present disclosure, a fourth diagram 390 illustrates another example of the priority transmission scheme. Here, the first resources (first transmission queue) associated with priority opportunity 1 (PO 1, the highest priority - level 1) may include four slots allocated for the four end nodes for transmitting information of the highest priority (level 1). Both the end node 1 and the end node 2 have information (of the highest priority level) to transmit. Both the end node 1 and the end node 2 may transmit the corresponding information. As such, after the level 1 information of the end node 1 and the end node 2 has been transmitted, the scheme may perform a priority reset to level 1 again. After the priority reset, the scheme may allocate the second resources (second transmission queue) associated with PO 1 (the highest priority - level 1) after the beacon. Since none of the end nodes have any information (of level 1 priority) for transmission, the scheme may proceed to allocate the third resources (third transmission queue) associated with PO 2 (the second highest priority - level 2) for the four end nodes.

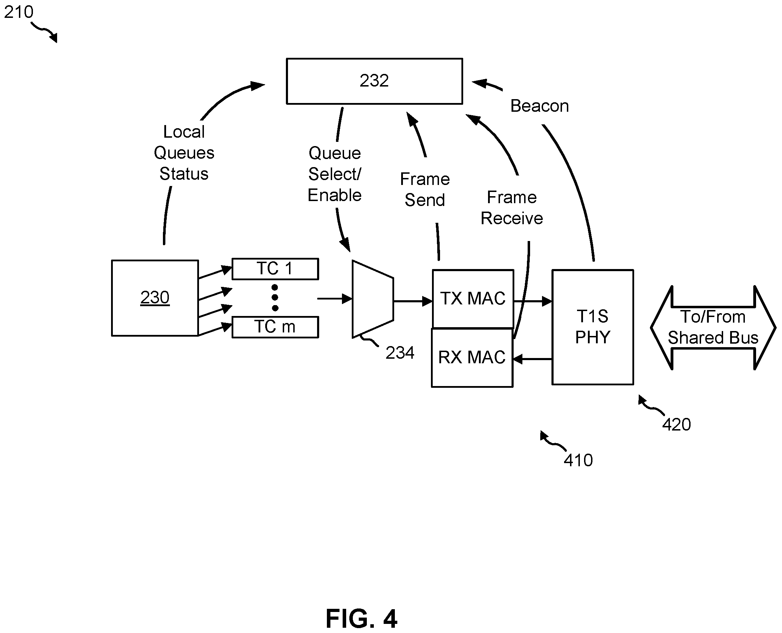

FIG. 4 illustrates an example of interfaces that may implement the priority transmission scheme according to aspects of the present disclosure. Referring to FIGs. 2 and 4, the diagram shown in FIG. 4 shows an end node 210. The priority transmission scheme may be implemented at a first location 410 between the transmission (TX) medium access control (TX MAC) interface of the end node 210 and the T1S physical interface of the end node 210, or at a second location 420 at the T1S physical (T1S PHY) interface of the end node 210.

Specifically, aspects of the present disclosure may include the TX MAC informing the T1S PHY what the priority of the next frame it wants to transmit is. When the PLCA priority cycle matches this priority, the MAC is allowed to transmit its frame. In certain aspects, 3 or 4 bits may be communicated.

In other aspects, the PHY may inform the MAC of PLCA cycles, and the MAC may track the priority of the current PLCA cycle. When the PLCA priority cycle matches this priority, the MAC is allowed to transmit its frame. In some aspects, only the detection of the COMMIT field may need to be communicated to the MAC from the PHY. One or more bits may be used for the communication.

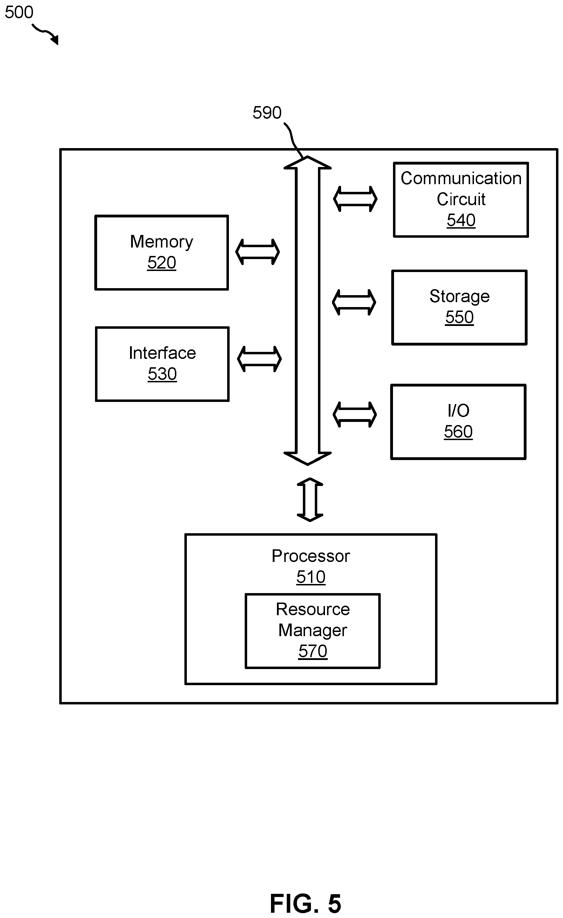

FIG. 5 illustrates an example of a controller 500 for implementing the priority transmission scheme described above according to aspects of the present disclosure. The controller 500 may be in a single package or as a chip set assembly with multiple components. The controller 500 may include a processor 510 configured to execute instructions stored in a memory 520. The memory 520 may include computer executable instructions. The controller 500 may include an interface circuit 530 configured to provide a hardware interface with external devices. The controller 500 may include a communication circuit 540 configured to communicate via wired or wireless communication channels. The controller 500 may include a storage 550 configured to store digital information. The controller 500 may include an input/output (I/O) interface device 560 configured to receive input signals and/or transmit output signals.

In some aspects of the present disclosure, the controller 500 may include a resource manager 570 configured to manage resources based on the priority of the information for transmission. For example, the resource manager 570 may be configured to provide resources/queues, granting permission for transmission, and/or replacing transmission resources/queues with resources/queues of equal or higher priorities. The resource manager 570 may be implemented as a hardware or a software. The resource manager 570 may be a standalone circuit, implemented by the processor 510 executing instructions in the memory, and/or a combination thereof.

In one aspect, the processor 510, the memory 520, the interface circuit 530, the communication circuit 540, the storage 550, and/or the I/O interface device 560 may be communicatively coupled with a bus 590 configured to exchange information among the processor 510, the memory 520, the interface circuit 530, the communication circuit 540, the storage 550, and/or the I/O interface device 560.

The controller 500 may be implemented as the host controller 230 and/or the priority controller 232.

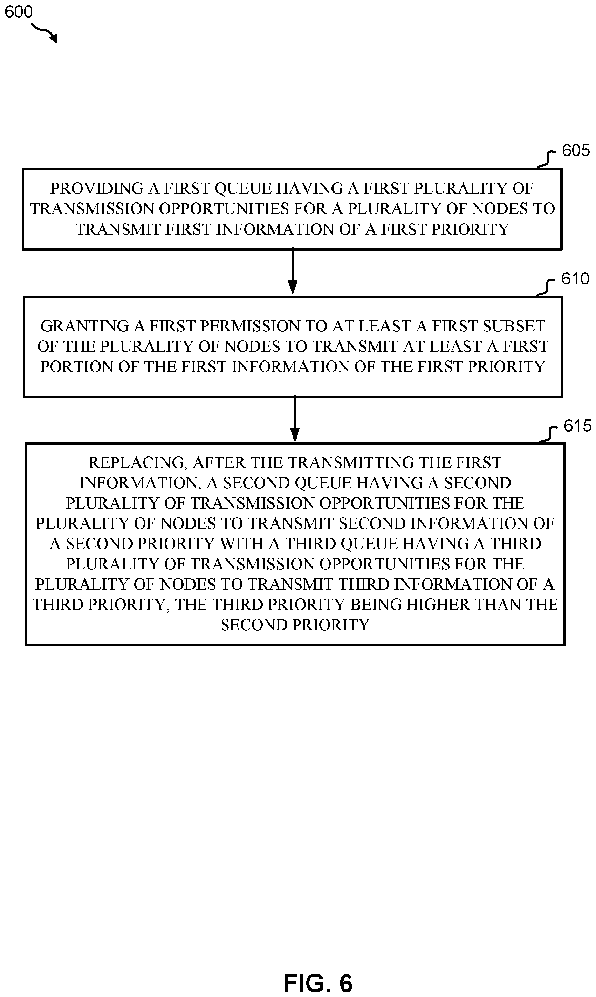

FIG. 6 illustrates an example of a method 600 of implementing transmission priority schemes according to aspects of the present disclosure. The method 600 may be implemented by the controller 500 and/or one or more subcomponents of the controller 500, such as the resource manager 570.

At 605, the method 600 may include providing a first queue having a first plurality of transmission opportunities for a plurality of nodes to transmit first information of a first priority. For example, the resource manager 570 and/or the controller 500 may be configured to, and/or define means for providing a first queue having a first plurality of transmission opportunities for a plurality of nodes to transmit first information of a first priority.

At 610, the method 600 may include granting a first permission to at least a first subset of the plurality of nodes to transmit at least a first portion of the first information of the first priority. For example, the resource manager 570 and/or the controller 500 may be configured to, and/or define means for granting a first permission to at least a first subset of the plurality of nodes to transmit at least a first portion of the first information of the first priority.

At 615, the method 600 may include replacing, after the transmitting the first information, a second queue having a second plurality of transmission opportunities for the plurality of nodes to transmit second information of a second priority with a third queue having a third plurality of transmission opportunities for the plurality of nodes to transmit third information of a third priority, the third priority being higher than the second priority. For example, the resource manager 570 and/or the controller 500 may be configured to, and/or define means for replacing, after the transmitting the first information, a second queue having a second plurality of transmission opportunities for the plurality of nodes to transmit second information of a second priority with a third queue having a third plurality of transmission opportunities for the plurality of nodes to transmit third information of a third priority, the third priority being higher than the second priority.

In summary, implementations of the present disclosure may include one or any combination of the following aspects.

Aspects of the present disclosure include a method for providing a first queue having a first plurality of transmission opportunities for a plurality of nodes to transmit first information of a first priority, granting a first permission to at least a first subset of the plurality of nodes to transmit at least a first portion of the first information of the first priority, and replacing, after the transmitting the first information, a second queue having a second plurality of transmission opportunities for the plurality of nodes to transmit second information of a second priority with a third queue having a third plurality of transmission opportunities for the plurality of nodes to transmit third information of a third priority, the third priority being higher than the second priority.

Aspects of the present disclosure include the method above, further comprises granting a second permission to at least a second subset of the plurality of nodes to transmit at least a second portion of the third information of the third priority.

Aspects of the present disclosure include any of the methods above, wherein granting the first permission to the first subset of the plurality of nodes to transmit comprises granting the first permission to a first node of the at least the first subset to transmit a first plurality of bits of the first information and granting the first permission to a second node of the at least the second subset to transmit a second plurality of bits of the first information.

Aspects of the present disclosure include any of the methods above, wherein granting the first permission to the first subset of the plurality of nodes to transmit comprises granting the first permission to a first node of the at least the first subset to transmit a first plurality of bits of the first information and refraining from granting the first permission to remaining nodes of the at least the first subset set to transmit remaining bits of the first information.

Aspects of the present disclosure include any of the methods above, wherein replacing the second queue comprises replacing the second queue after the granting the first permission to the first node.

Aspects of the present disclosure include any of the methods above, further comprises granting a second permission to at least a second subset of the plurality of nodes to transmit at least a second portion of the third information of the third priority.

Aspects of the present disclosure include any of the methods above, further comprises providing a fourth queue having a fourth plurality of transmission opportunities for a second node of the at least the first subset to transmit a second plurality of bits of the first information.

Aspects of the present disclosure include any of the methods above, further comprises granting a third permission to the second node to transmit the second plurality of bits of the first information.

Aspects of the present disclosure include any of the methods above, further comprises providing a beacon resource between the first plurality of transmission opportunities and the third plurality of transmission opportunities.

The above detailed description set forth above in connection with the appended drawings describes examples and does not represent the only examples that may be implemented or that are within the scope of the claims. The term "example," when used in this description, means "serving as an example, instance, or illustration," and not "preferred" or "advantageous over other examples." The detailed description includes specific details for the purpose of providing an understanding of the described techniques. These techniques, however, may be practiced without these specific details. For example, changes may be made in the function and arrangement of elements discussed without departing from the scope of the disclosure. Also, various examples may omit, substitute, or add various procedures or components as appropriate. For instance, the methods described may be performed in an order different from that described, and various steps may be added, omitted, or combined. Also, features described with respect to some examples may be combined in other examples. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, computer-executable code or instructions stored on a computer-readable medium, or any combination thereof.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium.

The various illustrative blocks and components described in connection with the disclosure herein may be implemented or performed with a specially-programmed device, such as but not limited to a processor, a digital signal processor (DSP), an ASIC, a FPGA or other programmable logic device, a discrete gate or transistor logic, a discrete hardware component, or any combination thereof designed to perform the functions described herein. A specially-programmed processor may be a microprocessor, but in the alternative, the processor may be any conventional processor, controller, microcontroller, or state machine. A specially-programmed processor may also be implemented as a combination of computing devices, e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a non-transitory computer-readable medium. Other examples and implementations are within the scope and spirit of the disclosure and appended claims. For example, due to the nature of software, functions described above may be implemented using software executed by a specially programmed processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items prefaced by "at least one of" indicates a disjunctive list such that, for example, a list of "at least one of A, B, or C" means A or B or C or AB or AC or BC or ABC (i.e., A and B and C).

Computer-readable media includes both computer storage media and communication media including any medium that facilitates transfer of a computer program from one place to another. A storage medium may be any available medium that may be accessed by a general purpose or special purpose computer. By way of example, and not limitation, computer-readable media may comprise RAM, ROM, EEPROM, CD-ROM or other optical disk storage, magnetic disk storage or other magnetic storage devices, or any other medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The previous description of the disclosure is provided to enable a person skilled in the art to make or use the disclosure. Various modifications to the disclosure will be readily apparent to those skilled in the art, and the common principles defined herein may be applied to other variations without departing from the spirit or scope of the disclosure. Furthermore, although elements of the described aspects may be described or claimed in the singular, the plural is contemplated unless limitation to the singular is explicitly stated. Additionally, all or a portion of any aspect may be utilized with all or a portion of any other aspect, unless stated otherwise. Thus, the disclosure is not to be limited to the examples and designs described herein but is to be accorded the widest scope consistent with the principles and novel features disclosed herein.

There follows a list of numbered features defining particular embodiments of the present disclosure. Where a numbered feature refers to one or more earlier numbered features then those features should be considered in combination with each other.
1. A method of communication in a network, comprising:
   providing a first queue having a first plurality of transmission opportunities for a plurality of nodes to transmit first information of a first priority;
   granting a first permission to at least a first subset of the plurality of nodes to transmit at least a first portion of the first information of the first priority; and
   replacing, after the transmitting the first information, a second queue having a second plurality of transmission opportunities for the plurality of nodes to transmit second information of a second priority with a third queue having a third plurality of transmission opportunities for the plurality of nodes to transmit third information of a third priority, the third priority being higher than the second priority.
2. The method of feature 1, further comprises granting a second permission to at least a second subset of the plurality of nodes to transmit at least a second portion of the third information of the third priority.
3. The method of feature 1 or 2, wherein granting the first permission to the first subset of the plurality of nodes to transmit comprises:
   granting the first permission to a first node of the at least the first subset to transmit a first plurality of bits of the first information; and
   granting the first permission to a second node of the at least the second subset to transmit a second plurality of bits of the first information.
4. The method of any of features 1 to 3, wherein granting the first permission to the first subset of the plurality of nodes to transmit comprises:
   granting the first permission to a first node of the at least the first subset to transmit a first plurality of bits of the first information; and
   refraining from granting the first permission to remaining nodes of the at least the first subset set to transmit remaining bits of the first information.
5. The method of feature 4, wherein replacing the second queue comprises replacing the second queue after the granting the first permission to the first node.
6. The method of feature 5, further comprises granting a second permission to at least a second subset of the plurality of nodes to transmit at least a second portion of the third information of the third priority.
7. The method of feature 6, further comprises providing a fourth queue having a fourth plurality of transmission opportunities for a second node of the at least the first subset to transmit a second plurality of bits of the first information.
8. The method of feature 7, further comprises granting a third permission to the second node to transmit the second plurality of bits of the first information.
9. The method of any of features 1 to 8, further comprises providing a beacon resource between the first plurality of transmission opportunities and the third plurality of transmission opportunities.
10. A controller of an end node, comprising:
   one or more memories including instructions; and
   one or more processors communicatively coupled with the one or more memories and configured to execute the instructions to:
      provide a first queue having a first plurality of transmission opportunities for a plurality of end nodes to transmit first information of a first priority;
      grant a first permission to at least a first subset of the plurality of end nodes to transmit at least a first portion of the first information of the first priority; and
      replace, after the transmitting the first information, a second queue having a second plurality of transmission opportunities for the plurality of end nodes to transmit second information of a second priority with a third queue having a third plurality of transmission opportunities for the plurality of end nodes to transmit third information of a third priority, the third priority being higher than the second priority.
11. The controller of feature 10, wherein the one or more processors are further configured to grant a second permission to at least a second subset of the plurality of end nodes to transmit at least a second portion of the third information of the third priority.
12. The controller of feature 10 or 11, wherein granting the first permission to the first subset of the plurality of end nodes to transmit comprises:
   granting the first permission to a first node of the at least the first subset to transmit a first plurality of bits of the first information; and
   granting the first permission to a second node of the at least the second subset to transmit a second plurality of bits of the first information.
13. The controller of any of features 10 to 12, wherein granting the first permission to the first subset of the plurality of end nodes to transmit comprises:
   granting the first permission to a first node of the at least the first subset to transmit a first plurality of bits of the first information; and
   refraining from granting the first permission to remaining end nodes of the at least the first subset set to transmit remaining bits of the first information.
14. The controller of feature 13, wherein replacing the second queue comprises replacing the second queue after the granting the first permission to the first node.
15. The controller of feature 14, wherein the one or more processors are further configured to grant a second permission to at least a second subset of the plurality of end nodes to transmit at least a second portion of the third information of the third priority.
16. The controller of feature 15, wherein the one or more processors are further configured to provide a fourth queue having a fourth plurality of transmission opportunities for a second node of the at least the first subset to transmit a second plurality of bits of the first information.
17. The controller of feature 16, wherein the one or more processors are further configured to grant a third permission to the second node to transmit the second plurality of bits of the first information.
18. The controller of any of features 10 to 17, wherein the one or more processors are further configured to provide a beacon resource between the first plurality of transmission opportunities and the third plurality of transmission opportunities.
19. A non-transitory computer readable medium having instructions stored therein that, when executed by one or more processors of a controller of an end node, cause the one or more processors to:
   provide a first queue having a first plurality of transmission opportunities for a plurality of end nodes to transmit first information of a first priority;
   grant a first permission to at least a first subset of the plurality of end nodes to transmit at least a first portion of the first information of the first priority; and
   replace, after the transmitting the first information, a second queue having a second plurality of transmission opportunities for the plurality of end nodes to transmit second information of a second priority with a third queue having a third plurality of transmission opportunities for the plurality of end nodes to transmit third information of a third priority, the third priority being higher than the second priority.
20. The non-transitory computer readable medium of feature 19, further comprising instructions for granting a second permission to at least a second subset of the plurality of end nodes to transmit at least a second portion of the third information of the third priority.

## Claims

1. A method of communication in a network, comprising:
providing a first queue having a first plurality of transmission opportunities for a plurality of nodes to transmit first information of a first priority;
granting a first permission to at least a first subset of the plurality of nodes to transmit at least a first portion of the first information of the first priority; and
replacing, after the transmitting the first information, a second queue having a second plurality of transmission opportunities for the plurality of nodes to transmit second information of a second priority with a third queue having a third plurality of transmission opportunities for the plurality of nodes to transmit third information of a third priority, the third priority being higher than the second priority.

2. The method of claim 1, further comprises granting a second permission to at least a second subset of the plurality of nodes to transmit at least a second portion of the third information of the third priority.

3. The method of claim 1 or 2, wherein granting the first permission to the first subset of the plurality of nodes to transmit comprises:
granting the first permission to a first node of the at least the first subset to transmit a first plurality of bits of the first information; and
granting the first permission to a second node of the at least the second subset to transmit a second plurality of bits of the first information.

4. The method of any of claims 1 to 3, wherein granting the first permission to the first subset of the plurality of nodes to transmit comprises:
granting the first permission to a first node of the at least the first subset to transmit a first plurality of bits of the first information; and
refraining from granting the first permission to remaining nodes of the at least the first subset set to transmit remaining bits of the first information.

5. The method of claim 4, wherein replacing the second queue comprises replacing the second queue after the granting the first permission to the first node.

6. The method of claim 5, further comprises granting a second permission to at least a second subset of the plurality of nodes to transmit at least a second portion of the third information of the third priority.

7. The method of claim 6, further comprises providing a fourth queue having a fourth plurality of transmission opportunities for a second node of the at least the first subset to transmit a second plurality of bits of the first information.

8. The method of claim 7, further comprises granting a third permission to the second node to transmit the second plurality of bits of the first information.

9. The method of any of claims 1 to 8, further comprises providing a beacon resource between the first plurality of transmission opportunities and the third plurality of transmission opportunities.

10. A controller of an end node, comprising:
one or more memories including instructions; and
one or more processors communicatively coupled with the one or more memories and configured to execute the instructions to:
provide a first queue having a first plurality of transmission opportunities for a plurality of end nodes to transmit first information of a first priority;
grant a first permission to at least a first subset of the plurality of end nodes to transmit at least a first portion of the first information of the first priority; and
replace, after the transmitting the first information, a second queue having a second plurality of transmission opportunities for the plurality of end nodes to transmit second information of a second priority with a third queue having a third plurality of transmission opportunities for the plurality of end nodes to transmit third information of a third priority, the third priority being higher than the second priority.

11. The controller of claim 10, wherein the one or more processors are further configured to grant a second permission to at least a second subset of the plurality of end nodes to transmit at least a second portion of the third information of the third priority.

12. The controller of claim 10 or 11, wherein granting the first permission to the first subset of the plurality of end nodes to transmit comprises:
granting the first permission to a first node of the at least the first subset to transmit a first plurality of bits of the first information; and
granting the first permission to a second node of the at least the second subset to transmit a second plurality of bits of the first information.

13. The controller of any of claims 10 to 12, wherein the one or more processors are further configured to operate in accordance with the method of any of claims 4 to 9.

14. A non-transitory computer readable medium having instructions stored therein that, when executed by one or more processors of a controller of an end node, cause the one or more processors to:
provide a first queue having a first plurality of transmission opportunities for a plurality of end nodes to transmit first information of a first priority;
grant a first permission to at least a first subset of the plurality of end nodes to transmit at least a first portion of the first information of the first priority; and
replace, after the transmitting the first information, a second queue having a second plurality of transmission opportunities for the plurality of end nodes to transmit second information of a second priority with a third queue having a third plurality of transmission opportunities for the plurality of end nodes to transmit third information of a third priority, the third priority being higher than the second priority.

15. The non-transitory computer readable medium of claim 14, further comprising instructions that, when executed by the one or more processors of the controller of an end node, cause the one or more processors to perform the method of any of claims 2 to 9.
